# EUROPEAN PATENT SPECIFICATION

(11) **EP 1 213 706 B1**
(45) Date of publication and mention of the grant of the patent: **19.07.2006**
(21) Application number: 00127087.5
(22) Date of filing: 11.12.2000
(51) Int. Cl.: G10L 15/06

(54) **Method for online adaptation of pronunciation dictionaries**
Verfahren zur Online-Anpassung von Aussprachewörterbüchern
Méthode d'adaptation en ligne de dictionnaires de prononciation

(43) Date of publication of application: 12.06.2002
(73) Proprietor: Sony Deutschland GmbH, 50829 Köln (DE)
(72) Inventor: Goronzy, Silke, 70327 Stuttgart (DE); Kompe, Ralf, Dr., 70327 Stuttgart (DE); Rapp, Stefan, Dr., 70327 Stuttgart (DE)
(74) Representative: Müller - Hoffmann & Partner

(56) References cited:
- EP-A- 0 987 682
- EP-A- 1 022 723
- EP-A- 1 022 725
- HOMMA S ET AL: "Iterative unsupervised speaker adaptation for batch dictation" PROCEEDINGS OF THE INTERNATIONAL CONFERENCE ON SPOKEN LANGUAGE PROCESSING, XX, XX, vol. 2, 3 October 1996 (1996-10-03), pages 1141-1144, XP002100688

## Description

The present invention relates to a method for recognizing speech according the generic part of claim 1, and in particular to a method for recognizing speech employing online adaptation of pronunciation dictionaries or lexica.

Recently, automatic speech recognition (ASR) has become more and more important. In particular, there is a need in many areas of technical and commercial activities for speaker independent or speaker adapting speech recognition methods and devices. These methods and devices are implemented and employed to realize interfaces between a human user and technical devices to reduce the burden of personal to be employed for assistance and services. Furtheron, these recognition methods and devices are used to simplify or support the usage and application of technical equipment.

It is known in the art to base recognition methods and devices on so-called pronunciation dictionaries and lexica which may contain in particular a multiplicity of pronunciation variants so as to deal with the different speaker specific pronunciations, as well as with dialects, foreign accents based on foreign mother-tongues and/or the like.

In prior art dictionaries or lexica the variety of pronunciation variants is generated from large databases and, therefore, these dictionaries and lexica are very databased specific and may not be valuable for specific tasks.

A further approach in generating a variety of multiple pronunciation variants is to base the pronunciation dictionary or the lexicon on a given set of pronunciation rules employing phonetic, linguistic and language model knowledge. Although the rule generated pronunciation variants are database independent, they tend to create a vast number of alternatives for the pronunciation variants.

Consequently, a major drawback of multiple pronunciation variants included in prior art dictionaries or lexica is that they cover a large number of pronunciation variants and, therefore, a large number of pronunciation variants which are not used for a specific speaker.

Additionally, the generated set of pronunciation variants is dependent on a specific database and/or on rules on which its generation is based. Furthermore, known dictionaries or lexica including multiple pronunciation variants are not able to deal with the large variety of possible dialects, foreign accents and speaker specific pronunciations in a flexible and less time consuming manner. The known approaches have further in common that the pronunciation variants have to be generated in advance of a recognition process, i.e. off-line.

Further information pertaining to the prior art can be found in EP 0 987 682 which discloses a method of adapting linguistic speech models in systems with automatic speech recognition, wherein the linguistic speech models assign occurrence probabilities to individual or to combinations of speech vocabulary elements. The method involves evaluating a list of N best recognition result alternatives for a speech segment to be recognized during adaptation with N greater than 1. During the adaptation a combination of several recognition result alternatives is fed into the list. Specifically, adaptation is carried out by increasing the occurrence probabilities of specific elements of the list of N best recognition result alternatives by weighting their respective occurrence probability with a heuristically calculated value.

EP 1 022 723 discloses unsupervised adaptation of a speech recognizer using reliable information among N-best strings, wherein the system performs unsupervised speech model adaptation using the recognizer to generate the N-best solutions for an input utterance. Each of these N-best solutions is tested by a reliable information extraction process. Reliable information is extracted by a weighting technique based on likelihood scores generated by the recognizer, or by a non-linear thresholding function. The system may be used in a single pass implementation or iteratively in a multi-pass implementation.

EP 1 022 725 relates to selection of acoustic models using speaker verification. Specifically, it discloses automatic detection of a change in speaker, wherein the system identifies the speaker, whether they have used the system before and whether a speaker adapted model for that speaker is already available. If this is the case, this model set will be taken for further recognition and adaptation. It moreover teaches that, in a typical speaker adaptive system, every time a change in speaker occurs, the user must chose which of the available model sets to use. E.g. the SI model set, if it is the first time the user is using the system, or a model set already adapted to that user, if they have used the system before. If adapted model sets are not stored at all, the adaptation process starts over and over again using the SI models, if the same speaker uses the system repeatedly.

Homma S., et al., "Iterative Unsupervised Speaker Adaptation for Batch Dictation," Proceedings of the International Conference on Spoken Language Processing, XX, XX, vol. 2, 3, October 1996 (1996-10-03), pages 1141-1144, XP002100688 teaches alternately performing speech recognition and speaker adaptation updating the acoustic models to speaker-dependent models.

It is an object of the invention to provide methods for speech recognition in which a burden of checking multiple pronounciation variants is reduced and which can easily be performed and implemented.

The object is achieved by a method for recognizing speech according to the generic part of claim 1 according to the invention with the features of the characterizing part of claim 1. Preferred embodiments of the inventive method for recognizing speech are subject of the dependent subclaims.

In the method according to the preamble of claim 1 for each process of recognition a current lexicon or pronunciation dictionary is used. Said current lexicon at least comprises recognition enabling information.

The inventive method for recognizing speech is characterized in that the process of recognition is started using a starting lexicon as said current lexicon. Further, a modified lexicon is generated after given numbers of performed recognition steps and/or obtained recognition results. The generating process for the modified lexicon is based on the current lexicon by adding to said current lexicon at least recognition relevant information with respect to at least one recognition result already obtained. Additionally, the process of recognition is then continued using said modified lexicon as said current lexicon in each case.

It is therefore a basic idea of the present invention to apply a recognition process to a, in particular continuously incoming or received speech flow. In the beginning of the process of recognition a starting lexicon is recalled or loaded and used as a current lexicon, in particular to obtain a first recognition result. It is a further idea of the present invention to evaluate or use recognition relevant information which is generated and/or extracted from the recognition process to modify the current lexicon so as to generate a modified lexicon. The recognition relevant information at least belongs to one recognition result which has already been obtained in former recognition processes and/or steps.

For example, the recognition relevant information for a first modification, namely of the starting lexicon, is obtained from the first recognized utterance, speech input or speech phrase. A further idea of the present invention is to continue the process of recognition in each case with said modified lexicon as said current lexicon. Therefore, after given numbers of performed recognition steps and/or recognition results the modified lexicon is constructed and then installed or loaded as said current lexicon for the next recognition step to be processed.

The advantage of the suggested inventive method for recognizing speech is that the starting lexicon may contain only basic information - recognition enabling information (REI) - in particular with respect to possible pronunciation variants. During the process of recognition the starting lexicon is then enriched with recognition relevant information (RRI), this information being specific for the current speaker. Therefore, an adaptation of the lexicon or dictionary is performed on-line, i.e. during the running process of recognition and/or after completed recognition steps. The major advantage over prior art speech recognition methods is the possible employment of relative small starting lexica and an on-line speaker specific adaptation of the current lexicon after certain numbers of recognition processes or recognition steps. Therefore pronounciation variants, accents and dialects which are not specific for the current speaker have not to be evaluated during the process of recognition according to the invention. Consequently, the method for recognizing speech according to the present invention can be performed with a reduced burden of checking pronunciation alternatives. Therefore, the inventive method for recognizing speech is less time and storage consuming with respect to prior art methods.

It is preferred that a modified lexicon or dictionary is repeatedly generated after each fixed and/or predetermined number of recognition steps and/or results, in particular after each single recognition step and/or result. Here, the number of recognition steps/results after which an adaptation of the current lexicon is performed is chosen to balance between a high performance rate and the recognition quality. It is of particular advantage if the online adaptation of the current lexicon or dictionary is performed. After each obtained recognition result or performed recognition step so as to ensure that for coming recognition steps the most recent obtained recognition relevant information (RRI) is included in the current lexicon and can be evaluated to increase recognition quality.

To determine the numbers of recognition steps/results after which a modification of the current lexicon is performed out of process information can be evaluated. Said numbers can be defined as fixed and/or predetermined numbers. Alternatively, these numbers can be determined and/or changed within a running process of recognition and/or adaptation, i. e. online.

According to a preferred embodiment of the present invention the method for recognizing speech comprises further the step of receiving a sequence of speech phrases and accordingly generating a sequence of corresponding representing signals and/or pronunciations. Additionally, the inventive method comprises the step of recognizing said received speech phrases by generating and/or outputting at least a first sequence of words or the like, in particular for each representing signal as a recognized speech phrase for each received speech phrase. Thereby, a sequence of recognized pronunciations and/or speech phrases is generated and/or output.

The inventive method for recognizing speech therefore performs a division or sub-division of the continuously incoming speech flow into a sequence of speech phrases. For each speech phrase more less a single representing signal and/or pronunciation is generated. For each representing signal a distinct word, subword unit or sequence of words or subword units which corresponding to said received speech phrase is generated on the basis of each representing signal during the recognizing process. As a result of the inventive method for recognizing speech a sequence of recognized speech phrases is generated and/or output.

According to a further aspect of the present invention a lexicon is used - in particular as said starting lexicon and/or as said current lexicon in each case - which contains at least recognition enabling information (REI) and/or recognition relevant information (RRI) at least with respect to possible word candidates and/or with respect to possible subword candidates.

Thereby, at least recognition enabling information is contained in said lexicon to be used during the recognition process. Recognition enabling information is the basic information which is necessary to perform a recognition process at all. This particular basic information or recognition enabling information is the major starting point for the recognition process and is therefore in particular contained in the starting lexicon. The recognition relevant information is additional information which is mainly generated during the distinct recognition steps or distinct recognition processes and then added via the process of modifying the current lexicon to obtain a modified lexicon and therefore finally to adapt the current lexicon. Recognition relevant information or parts thereof may also be included in the starting lexicon to perform a better recognition performance, even in the very beginning of the application of the method and therefore in the first steps of recognizing speech. Recognition relevant information belongs to at least the possible word candidates and/or possible subword candidates from which the recognition result is constructed or may be constructed in each case.

According to a further embodiment of the present invention phonems, phones, syllables, subword units and/or alike and/or a combination or sequence thereof are used as word or subword candidates, in particular during the recognition process or step and/or within said starting and/or current lexicon. This ensures the best refinement of analysis of the incoming speech flow, as not only complete words are analyzed and processed but also subword units as phonemes, phones, syllables and/or the like or parts or combination thereof are processed.

For a particular thorough analysis and recognition process vocabulary information, pronunciation information, language model information, grammar and/or syntax information, additional semantic information and/or the like is used within or during each recognition process or step, in particular as a part of said recognition enabling or related information (REI, RRI) of said lexicon, in particular of said starting lexicon and/or of said current lexicon in each case.

The starting lexicon and/or the current lexicon may be built up more or less complex. It is clear that vocabulary information and additional pronunciation information are the basic information contents of lexica to enable a recognition process per se. But to increase the recognition rate and/or quality it is of particular advantage to add further information, in particular information from language models, from grammar and/or syntax structures and/or additional semantic information. Furtheron, particular sets of speaker related rules may also be included.

It is of particular advantage in accordance to a further embodiment of the inventive method of recognizing speech to have a starting lexicon which is more or less completely independent from any speaker. With the speaker independent starting lexicon one achieves an unbiased or unforced starting point for the recognition process. This unbiased starting point may correspond to a pure and/or dialect and accent-free mother-language or mother-tongue. In other cases however, it may be advantageous to add to the starting lexicon additional information, for instance with respect to a particular dialect or accent. This may be of advantage when using the inventive method for instance in applications where the speaker probably belongs to a certain audience with a particular predicted speaking behaviour, for instance in applications in closed regions or the like.

According to another embodiment of the present invention the modified lexicon and/or the current lexicon is built up as a decomposable composition of said starting lexicon and a speaker related lexicon. The latter of which may then contain speaker specific recognition relevant information, in particular with respect to at least the recognition results already obtained for the current speaker. According to that measure it is easily possible to discriminate between the starting lexicon which is introduced in the beginning of each recognition session with respect to a well-defined speaker and the modification of the starting lexicon which is speaker-dependent, to achieve a modified lexicon after each recognition process or recognition step.

It is advantageous to construct the speaker-related lexicon within the current recognition process or step and/or from former and/or foreign recognition processes. It is therefore possible to provide additional information in the form of a speaker-related lexicon which may be added to the starting lexicon, for instance after a first or several first recognition steps or recognition processes. This additional information may belong to and/or be obtained from former and/or foreign recognition processes. Consequently, the set of additional information which is speaker-specific may stem from a recognition process terminated in the past or from recognition processes being performed by another method for recognizing speech and/or by a foreign speech recognizer.

For instance, if a speaker with a strong accent is using the system some of the pronunciation variants - in particular some of the native variants - may become irrelevant. These may then either be removed or appropriately be weighted, so as to ensure that the new and/or important pronunciation variants of the current speaker will be preferred.

Of course, exact bookkeeping for all modifications is necessary to include removed information after speaker change. Therefore, according to a further preferred embodiment of the present invention the recognition related information and in particular the speaker related lexicon is removed from the current lexicon when terminating the current recognition process or recognition session with the current speaker and/or before beginning a further recognition process or recognition session with a new and/or another speaker. This enables again a well-defined starting point for each new recognition session, i.e. an unbiased speech recognizing method. It is therefore of particular advantage to have the aforementioned decomposable structure of the current lexicon being built up as a decomposable composition of the starting lexicon for the speaker-specific or speaker-related lexicon. Then the separation is achieved by decomposing the composition of the starting lexicon from the modification in the form of the speaker-related lexicon and to yield the starting lexicon as a starting point for a new recognition session.

According to another preferred embodiment of the present invention said speaker-related lexicon and/or speaker-related signature data, in particular in the sense of a speaker-specific or speaker-related acoustical or speech signature, are obtained during a recognition process or step. Furtheron, these data, i.e. the speaker-related lexicon and the speaker-related or speaker-specific acoustical signature data are stored and maintained, in particular in a set or list of speech-related lexica and/or signatures.

These measures make possible a particular fast speech recognition for the case that only a finite number of speakers to be distinguished have to be processed. Such a method may be employed for example within the safe or shielded building of a company having a given and fixed number of employees.

Within the different recognition processes the inventive method then collects speaker-specific data in the sense of speaker-related lexica and/or in the sense of speaker-related signature data and stores these data in said list for speaker-related lexica and/or signatures so as to perform a speaker recognition and identification during the next recognition session to be performed. If then a speaker already known enters a next recognition session from the first recognition results of the newly entered recognition session a speaker recognition and identification is performed. If then the known speaker is identified as already known an corresponding speaker-related lexicon can immediately be added to modify the starting lexicon to achieve an enriched current lexicon yielding much better recognition results even in the beginning of a new session.

It is therefore a further aspect of the present invention according to another advantageous embodiment to check in the beginning of a new recognition process - in particular based on the set or list of speaker-related lexica and/or signatures - whether the speaker of the current process is a known speaker. Furtheron, in the case of a known speaker under process the speaker related lexicon being specific for the known speaker is recalled and restored from the set or list of speaker-related lexica and combined to the current lexicon, in particular to the starting lexicon, so as to yield a speaker-adapted lexicon with high recognition efficiency.

According to another preferred embodiment of the inventive method for recognizing speech information which is not covered or supported by the speaking behaviour of the current speaker and/or which is not covered by the recognition related information of the current recognition process or step is removed from the current lexicon, in particular from the starting lexicon, during the recognition process or step, in particular to form a modified lexicon or a current lexicon for the next recognition step or process.

This measure is in particular based on the recognition related information of the current recognition process or step. This measure means, that information initially contained in the current lexicon, in particular in the starting lexicon, which is not covered, realized or confirmed by recognition results and/or recognition related information in connection with the current speaker is removed and cancelled from the current lexicon, in particular from the starting lexicon, to reduce the amount of data within said lexicon. In the application it might be necessary to remove pronunciation variants already contained in the starting lexicon or current lexicon as the current speaker under process has a different dialect which is not realized by his speaking behaviour. In this case, keeping track of deleted information or entries is necessary to enable a reset at a speaker change.

In accordance to another preferred embodiment of the method for recognizing speech according to the invention in each case the recognition relevant information is generalized throughout the whole modified and/or current lexicon and/or stating lexicon, where appropriate. Accordingly, not only the actually uttered phrases are evaluated and are included into the current/modified lexicon with respect to their specific pronunciation but also possible pronunciation variants for other possible utterances are derived therefrom taking into account the acoustical and speech context.

Although it is known in the prior art that including multiple pronunciation variants can increase rates of speech recognition methods and systems. It is also known however, that recognition performance may decrease in the case of too many pronunciation variants, dialects or accents being included. This is true because the number of alternatives to be checked increases with the increasing number of variants. Additionally, also confusability between the words increases.

In prior art approaches it is known to try to learn recognition variants from large databases. Although, there are advantages that only those variants are included that do really occur - namely in the database - it is on the other hand disadvantageous, that these variants and therefore the evaluation according to the database based dictionary is very database-specific and may not be valuable for specific tasks.

The other possibility in the prior art approach is to create a set of pronunciation variants by evaluating a set of pronunciation rules and also including phonetic and linguistic knowledge. Although, these rules are then database-independent, it is known, that they tend to create very large number of alternatives including those which occur very infrequently.

The so far described approaches in the prior art work off-line and in particular in advance of a recognition process.

To achieve particular speaker independent recognition systems the proposed method derives from the incoming speech of the current speaker together with a recognition result the used pronunciation variants and then in particular generalizes these pronounciation variants throughout the whole lexicon. This generalization can be done by using a set of very general rules. As a result, only those variants which are needed to obtain an optimal recognition result are included for the particular speaker. Particular, all other possible variants which are not needed to describe the speaking behaviour of the current user are excluded. Therefore the number of variants of pronounciations and thus the size of the lexicon or the dictionary is kept as small as possible.

After a change of the speaker, i.e. in the case of a new recognition session, the variants of the former speaker are removed from the current lexicon, but they can optionally be saved and be recalled in a later session when the former speaker has to be processed again. Also pronunciation variants that were not used for a long time can optionally be removed from the lexicon or a dictionary to keep its size as small as possible.

The proposed method does not need knowledge about the mother-tongue of the current speaker. Furtheron, the proposed method has the advantage that only the relevant pronunciation variants are included into the dictionary or lexicon. Therefore, no large databases for each possible mother-tongue are needed to derive the necessary pronounciation variations. Additionally, no step of rules for each mother-tongue is necessary.

The inventive method for recognizing speech is in particular applicable for speaker-independent systems which have to cope with dialects, foreign accents and foreign mother-tongues.

Since the speakers often do not use a pronunciation variant but sometimes also use incorrect pronunciation these can be covered by the inventive method in contrast to prior art systems which cannot deal with these incorrect pronunciations. These prior art systems use pronunciation rules in particular only for the cases where the mother-tongue of the speaker is known. For publicly accessible systems or speech recognizer one generally does not have further information on the speakers origin or dialect. In such a case the inventive method is of particular advantage. Furtheron, it is not possible to generate and store rules for any kind of possible mother-tongue. Additionally, the database oriented approach is also not feasible, since it would be extremely expensive to provide a database large enough for each mother-tongue, each dialect and accent and to then learn pronunciation variants therefrom. Recognition of non-native speech is a severe problem in many applications, e.g. when foreign addresses or music or TV program titles in a foreign language have to be selected by speech directly. In these applications the inventive method is of particular advantage.

The inventive method for recognizing speech will be explained by means of a schematical drawing based on preferred embodiments of the inventive method.
- **Fig. 1**: shows by means of a block diagram a preferred embodiment of the inventive method for recognizing speech.
- **Fig. 2**: shows a block diagram which illustrates a method for recognizing speech of the prior art.

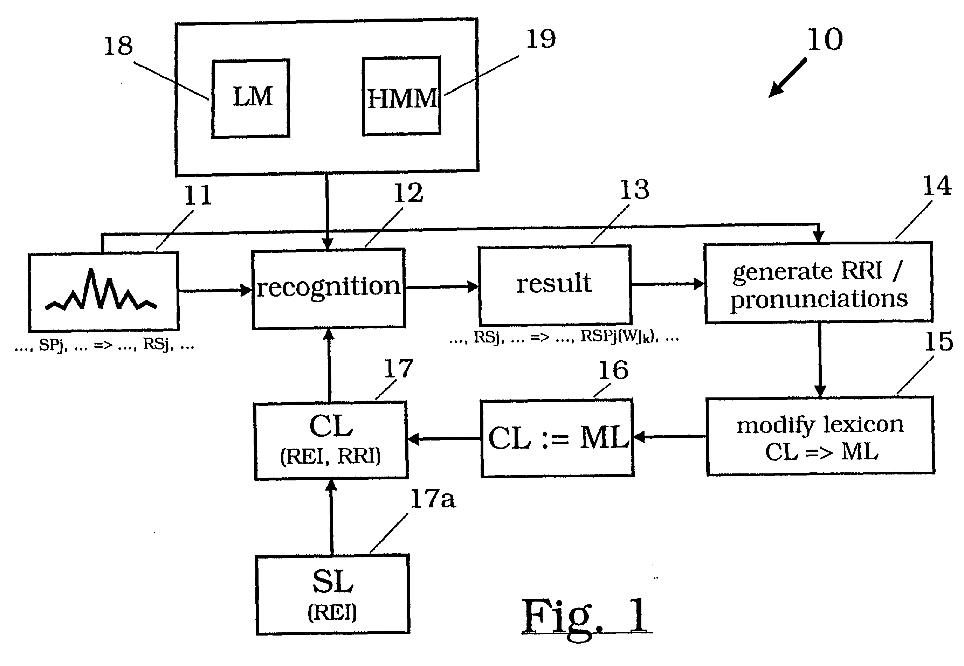

Fig. 1 illustrates by means of a schematic block diagram the processing of an embodiment of the inventive method for recognizing speech 10.

In step 11 of the method 10 shown in Fig. 1 an incoming speech flow is received - for example continuously spoken speech - as a sequence of speech phrases ..., Spj, ... and pre-processed, in the sense of the filtering and/or digitizing process so as to obtain a corresponding sequence of representing signals .., RSj, ... each of which being a combination of possible word or subword candidates ..., Wⱼₖ, .... In the next step 12 the received speech is at least in part recognized using a current lexicon CL or dictionary being provided by step 17 which may be for the first recognition step for the current speaker the starting lexicon SL as provided from step 17a and containing recognition enabling information REI.

Additionally the recognition step 12 may also be based on language models LM as well as on hidden Markow models HMM which are supported by processing steps 18 and 19. Then the result of the recognition process is provided in step 13.

The incoming speech flow as provided by step 11 and/or the recognition result for the speech flow as provided by step 13 are supplied to step 14 of determining recognition related information RRI, and in particular of determining the pronunciation variants used. In the next step 15 it is checked whether these pronunciation variants and the distinct recognition related information has been already included into the current lexicon CL. The missing information is then included and/or generalized throughout the whole lexicon to yield a modified lexicon ML on the basis of the current lexicon CL.

In step 16 the modified lexicon ML is restored as the current lexicon CL for the next recognition step 12.

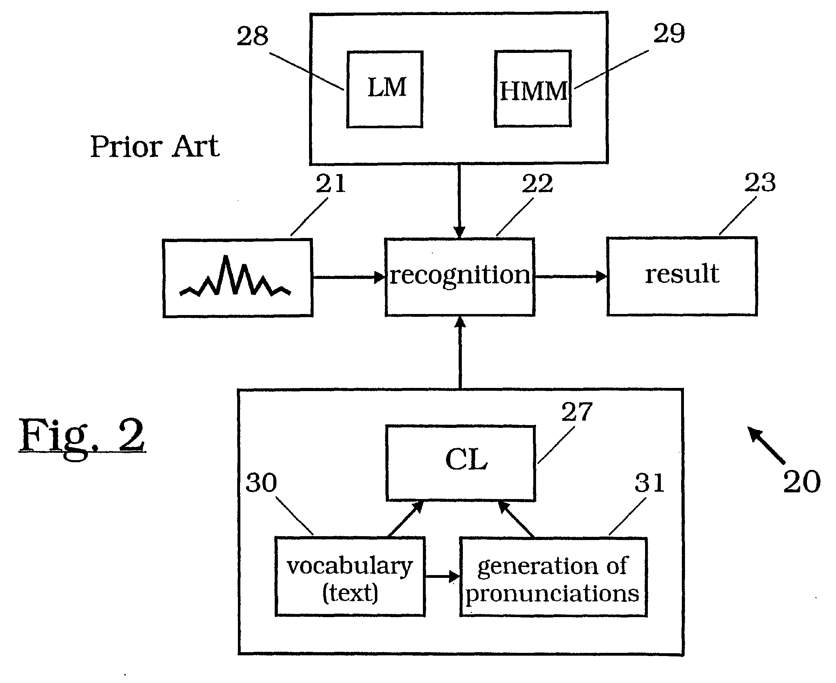

In contrast to the present invention in a recognition method 20 of the prior art there is no closed loop of processing the incoming speech as well as the recognition related data. The dictionary CL provided to the recognition process 22 in step 27 is a closed entity which is generated off-line in particular in advance of the whole recognition process 20. The dictionary CL provided by step 27 is kept fixed during the performance of the recognition 22. In step 21 the incoming speech is provided in a pre-processed form to the recognition step 22. The recognition result is provided with the step 23 of Fig. 2, but not further evaluated with respect to the dictionary or lexicon CL. Again hidden Markow models HMM and other language models LM are used and evaluated in the recognition step 22 and are provided by steps 28 and 29 respectively.

In the off-line generation 27 of the dictionary CL based on the vocabulary provided in step 30 the pronounciation variants are generated in step 31 and supplied to the dictionary CL which then influences the recognition step 22 as described above.

## Claims

1. A method for speech recognition on the basis of a current lexicon (CL) that comprises recognition enabling information (REI), said method comprising:
one or more first recognition steps employing a starting lexicon (SL) as said current lexicon (CL),
a step of generating a modified lexicon (ML) based on said current lexicon (CL) by adding to said current lexicon (CL) at least recognition relevant information (RRI) with respect to at least one recognition result obtained in said one or more first recognition steps, which recognition relevant information (RRI) belongs to at least the possible word candidates and/or possible subword candidates from which the recognition result is constructed or may be constructed in each case,
one or more second recognition steps employing said modified lexicon (ML) as said current lexicon (CL).

2. The method of claim 1, wherein said step of generating a modified lexicon comprises the steps of:
determining pronunciation variants used by the current speaker,
determining the presence or absence of said pronunciation variants in the current lexicon; and
including those pronunciation variants used by the current speaker that are absent from the current lexicon thereinto and/or generalizing said absent pronunciation variants throughout the entire current lexicon.

3. The method of claim 2, wherein
said generalization is carried out on the basis of a set of rules.

4. The method of any one of the preceding claims, wherein
said step of generating a modified lexicon comprises excluding those pronunciation variants that are not needed to describe the speaking behavior of the current speaker from the current lexicon.

5. Method according to any one of the preceding claims,
wherein a modified lexicon (ML) is repeatedly generated after each fixed and/or predetermined number of recognition steps and/or results, in particular after each single recognition step and/or result.

6. Method according to any one of the preceding claims,
wherein the number of recognition steps and/or results after which a modified lexicon (ML) is generated is determined and/or changed within the current process of recognition and/or adaptation.

7. Method according to any one of the preceding claims, further comprising the steps of:
- receiving a sequence of speech phrases (SP1, ..., SPN) and accordingly generating a sequence of corresponding representing signals (RS1, ..., RSN) and
- recognizing said received speech phrases (SP1, ..., SPN) by generating and/or outputting at least a first sequence of words (Wj₁, ..., Wjₙj) or the like for each representing signal (RSj) as a recognized speech phrase (RSPj) for each received speech phrase (SPj),
- thereby generating and/or outputting a sequence of recognized speech phrases (RSP1, ..., RSPN).

8. Method according to any one of the preceding claims,
wherein a lexicon is used - in particular as said starting lexicon (SL) and/or as said current lexicon (CL) in each case - which contains at least recognition enabling information (REI) and/or recognition relevant information (RRI) at least with respect to possible word candidates and/or possible subword candidates.

9. Method according to claim 8,
wherein phonemes, phones, syllables, subword units, a combination or sequence thereof and/or the like are used as subword candidates, in particular during each recognition process or step and/or within said starting and/or current lexicon (SL, CL).

10. Method according to any one of the preceding claims,
wherein vocabulary information, pronunciation information, language model information, grammar and/or syntax information, additional semantic information and/or the like is used within each recognition process, in particular as a part of said recognition enabling/related information (REI, RRI) of said lexicon in particular of said starting lexicon (SL) and/or of said current lexicon (CL) in each case.

11. Method according to any one of the preceding claims,
wherein a speaker independent starting lexicon (SL) is used.

12. Method according to any one of the preceding claims,
wherein said modified lexicon (ML) and/or the current lexicon (CL) are built up as a decomposable composition (SL + SRL) of said starting lexicon (SL) and a speaker related lexicon (SRL),
the latter of which containing speaker specific recognition relevant information (RRI), in particular with respect to at least the recognition results already obtained for the current speaker.

13. Method according to claim 12,
wherein said speaker related lexicon (SRL) is constructed within a current recognition step or process and/or obtained from former and/or foreign recognition processes, in particular by performing an appropriate weighting process.

14. Method according to any one of the preceding claims,
wherein the recognition related information (RRI) and in particular the speaker related lexicon (SRL) is removed from said current lexicon (CL) with the termination of the recognition process for the current speaker and/or before beginning another recognition process, in particular with a new or another speaker.

15. Method according to any one of the preceding claims,
wherein for each specific speaker under process said speaker related lexicon (SRL) and/or speaker related signature data are obtained during the recognition process and/or are stored.

16. Method according to claim 15,
wherein in the beginning of a new recognition process it is checked - in particular based on the set or list of speaker related lexica and/or signatures - whether the speaker under process is a known speaker and
wherein in the case of a known speaker under process the speaker related lexicon (SRL) being specific for the current speaker is recalled from the set or list of speaker-related lexica and combined into a current lexicon (CL), in particular to a starting lexicon (SL), so as to yield a speaker-adapted lexicon with high recognition efficiency.

17. Method according to any one of the preceding claims,
wherein based on the recognition related information (RRI) of the current recognition process and/or step information which is not covered or supported by the speaking behaviour of the current speaker and/or by the recognition related information (RRI) is removed from said current lexicon (CL), in particular from the starting lexicon (SL) during the recognition process, in particular to form a modified lexicon (ML) or a current lexicon (CL) for a next recognition step.

18. Method according to any one of the preceding claims,
wherein track is kept of the changes performed in each case on the current lexicon (CL) so as to enable restoring or resetting the recognition process in the case of a speaker change.

19. Method according to any one of the preceding claims,
wherein the recognition relevant information (RRI) or the like is generalized throughout the whole modified (ML) and/or current lexicon (CL) and/or starting lexicon (SL), where appropriate.

## Patentansprüche

1. Verfahren zur Spracherkennung auf Basis eines Erkennungsbefähigungsinformation (REI) aufweisenden aktuellen Sprachlexikons (CL), wobei das Verfahren aufweist:
einen oder mehrere erste Erkennungsschritte unter Einsatz eines Ausgangslexikons (SL) als aktuelles Lexikon (CL);
einen Schritt zum Erzeugen eines modifizierten Lexikons (ML) auf Basis des aktuellen Lexikons (CL) durch Hinzufügen von wenigstens Erkennungs-relevanter Information (RRI) zum aktuellen Lexikon (CL), die in Bezug zu wenigstens einem in dem einen oder den mehreren ersten Erkennungsschritten erzielten Erkennungsergebnis steht, wobei die Erkennungs-relevante Information (RRI) wenigstens den möglichen Wort-Kandidaten und/oder möglichen Subwort-Kandidaten zugeordnet ist, aus denen das Erkennungsergebnis aufgebaut wird oder im jeweiligen Fall aufgebaut werden kann,
einen oder mehrere zweite Erkennungsschritte unter Einsatz des modifizierten Lexikons (ML) als aktuelles Lexikon (CL).

2. Verfahren nach Anspruch 1, wobei der Schritt des Erzeugens eines modifizierten Lexikons die Schritte aufweist:
Ermitteln von Aussprachevarianten, die der aktuelle Sprecher einsetzt,
Ermitteln des Vorhandenseins oder Nicht-Vorhandenseins der Aussprachevarianten im aktuellen Lexikon; und
Einschließen derjenigen Aussprachevarianten in das aktuelle Lexikon, die vom aktuellen Sprecher verwendet werden und nicht darin enthalten sind, und/oder Verallgemeinern der nicht-vorhandenen Aussprachevarianten über das gesamte aktuelle Lexikon.

3. Verfahren nach Anspruch 2, wobei
die Verallgemeinerung auf Basis einer Zusammenstellung von Regeln ausgeführt wird.

4. Verfahren nach einem der vorangehenden Ansprüche, wobei
der Schritt des Erzeugens eines modifizierten Lexikons das Ausschließen derjenigen Aussprachevarianten aufweist, die nicht erforderlich sind um das Sprachverhalten des aktuellen Sprechers des aktuellen Lexikons zu beschrieben.

5. Verfahren nach einem der vorangehenden Ansprüche,
wobei ein modifiziertes Lexikon (ML) nach jedem festgelegten und/oder jeder bestimmten Anzahl von Erkennungsschritten und/oder Ergebnissen wiederholt erzeugt wird, insbesondere nach jedem einzelnen Erkennungsschritt und/oder Ergebnis.

6. Verfahren nach einem der vorangehenden Ansprüche,
wobei die Anzahl von Erkennungsschritten und/oder Ergebnissen, nach denen einen ein modifiziertes Lexikon (ML) erzeugt wird, innerhalb des aktuellen Erkennungsprozesses und/oder Adaptionsprozesses ermittelt und/oder geändert wird.

7. Verfahren nach einem der vorangehenden Ansprüche mit den zusätzlichen Schritten:
- Empfangen einer Sequenz von Sprachphrasen (SP1, ...., SPN) und entsprechendes Erzeugen von zugehörigen Kennzeichnungssignalen (RS1, ...., RSN) und
- Erkennen der empfangenen Sprachphrasen (SP1, ..., SPN) durch Erzeugen und/oder Ausgeben von wenigstens einer ersten Wortsequenz (Wj₁, ..., Wjₙⱼ) oder desgleichen für jedes Kennzeichnungssignal (RSj) als erkannte Sprachphrase (RSPj) für jede empfangene Sprachphrase (SPj),
- wodurch eine Sequenz erkannter Sprachphrasen (RSP1, ..., RSPN) erzeugt und/oder ausgegeben wird.

8. Verfahren nach einem der vorangehenden Ansprüche,
wobei ein Lexikon - insbesondere als Ausgangslexikon (SL) und/oder aktuelles Lexikon (CL) im jeweiligen Falle - verwendet wird, das wenigstens Erkennungsbefähigungsinformation (REI) und/oder Erkennungs-relevante Information (RRI) wenigstens in Bezug auf mögliche Wortkandidaten und/oder mögliche Sub-Wortkandidaten enthält.

9. Verfahren nach Anspruch 8,
wobei Phoneme, Phone, Silben, Sub-Wort-Einheiten, eine Kombination oder Sequenzen hiervon und/oder desgleichen als Sub-Wortkandidaten verwendet werden, insbesondere während jedes Erkennungsprozesses oder Schrittes und/oder im Ausgangslexikon und/oder aktuellen Lexikon (SL; CL).

10. Verfahren nach einem der vorangehenden Ansprüche,
wobei Vokabularinformation, Ausspracheinformation, Sprachmodellinformation, Grammatik und/oder Syntax-Information, zusätzliche semantische Information und/oder desgleichen innerhalb jedes Erkennungsprozesses verwendet werden, insbesondere als Teil der Erkennungsbefähigungsinformation/Erkennungs-bezogener Information (REI, RRI) des Lexikons, insbesondere des Ausgangslexikons (SL) und/oder des aktuellen Lexikons (CL) im jeweiligen Falle.

11. Verfahren nach einem der vorangehenden Ansprüche, wobei ein Sprecher-unabhängiges Lexikon (SL) verwendet wird.

12. Verfahren nach einem der vorangehenden Ansprüche,
wobei das modifizierte Lexikon (ML) und/oder das aktuelle Lexikon (CL) als zerlegbare Zusammenstellung (SL + SRL) des Ausgangslexikons (SL) und eines Sprecher-bezogenen Lexikons (SRL) aufgebaut sind,
Letzteres hiervon Sprecher-bezogene Erkennungs-relevante Information (RRI) enthält, insbesondere in Bezug auf wenigstens die bereits für den aktuellen Sprecher erhaltenen Erkennungsergebnisse.

13. Verfahren nach Anspruch 12,
wobei das Sprecher-bezogene Lexikon (SRL) innerhalb eines Erkennungsschrittes oder Prozesses aufgebaut wird und/oder von vorherigen und/oder fremden Erkennungsprozessen erhalten wird, insbesondere durch Ausführen eines geeigneten Gewichtungsprozesses.

14. Verfahren nach einem der vorangehenden Ansprüche,
wobei die Erkennungs-bezogene Information (RRI) und insbesondere die Sprecher-bezogene Information (SRL) aus dem aktuellen Lexikon (CL) mit Beendigung des Erkennungsprozesses für den aktuellen Sprecher und/oder vor Beginn eines weiteren Erkennungsprozesses, insbesondere mit einem neuen Sprecher, entfernt wird.

15. Verfahren nach einem der vorangehenden Ansprüche,
wobei für jeden in Bearbeitung befindlichen spezifischen Sprecher das Sprecher-bezogene Lexikon (SRL) und/oder die Sprecher-bezogenen Signaturdaten während des Erkennungsprozesses erhalten und/oder gespeichert werden.

16. Verfahren nach Anspruch 15,
wobei zu Beginn eines neuen Erkennungsprozesses überprüft wird - insbesondere auf Basis der Zusammenstellung oder Liste von Sprecher-bezogenen Lexika und/oder Signaturen - ob der in Bearbeitung befindliche aktuelle Sprecher ein bekannter Sprecher ist und
wobei das für den aktuellen Sprecher spezifische Sprecher-bezogene Lexikon (SRL) im Falle eines in Bearbeitung befindlichen bekannten Sprechers von der Zusammenstellung oder Liste von Sprecher-bezogenen Lexika abgerufen und in ein aktuellen Lexikon (CL) eingebunden wird, insbesondere in ein Ausgangslexikon (SL), so dass ein Sprecher-adaptiertes Lexikon mit hoher Erkennungseffizienz erzielt wird.

17. Verfahren nach einem der vorangehenden Ansprüche,
wobei auf Basis der Erkennungs-bezogenen Information (RRI) des aktuellen Erkennungsprozesses und/oder Schrittes Information, die nicht durch das Sprecherverhalten des aktuellen Sprechers und/oder
von der Erkennungs-bezogenen Information (RRI) abgedeckt oder unterstützt wird, aus dem aktuellen Lexikon entfernt wird, insbesondere zur Ausbildung eines modifizierten Lexikons (ML) oder eines aktuellen Lexikons (CL) im Hinblick auf einen nächsten Erkennungsschritt.

18. Verfahren nach einem der vorangehenden Ansprüche,
wobei die jeweils bezüglich des aktuellen Lexikons (CL) durchgeführten Änderungen beobachtet werden um ein Wiederherstellen oder Zurücksetzen des Erkennungsprozesses im Falle einer Sprecheränderung zu ermöglichen.

19. Verfahren nach einem der vorangehenden Ansprüche,
wobei die Erkennungs-relevante Information (RRI) oder desgleichen über das gesamte modifizierte Lexikon (ML) und/oder aktuelle Lexikon (CL) und/oder Ausgangslexikon (SL), sofern geeignet, verallgemeinert wird.

## Revendications

1. Procédé pour reconnaître de la parole sur la base d'un lexique courant (CL) qui comprend de l'information permettant la reconnaissance (REI), ledit procédé comprenant :
une ou plusieurs étapes de première reconnaissance employant, comme lexique courant (CL), un lexique de départ (SL) ;
une étape de production d'un lexique modifié (ML) basé sur ledit lexique courant (CL) par ajout audit lexique courant (CL) d'au moins de l'information utile pour la reconnaissance (RRI) en ce qui concerne au moins un résultat de reconnaissance obtenu dans lesdites une ou plusieurs étapes de première reconnaissance, laquelle information utile pour la reconnaissance (RRI) appartient à au moins les mots candidats possibles et/ou les morceaux de mot candidats possibles à partir desquels le résultat de reconnaissance est construit ou peut être construit dans chaque cas ;
une ou plusieurs étapes de seconde reconnaissance employant, comme lexique courant (CL), ledit lexique modifié (ML).

2. Procédé selon la revendication 1, dans lequel ladite étape de production d'un lexique modifié comprend les étapes :
de détermination de variantes de prononciation utilisées par le locuteur courant ;
de détermination de la présence ou de l'absence desdites variantes de prononciation dans le lexique courant ; et
d'introduction dans le lexique courant des variantes de prononciation utilisées par le locuteur courant qui en sont absentes et/ou de généralisation desdites variantes de prononciation absentes dans tout le lexique courant.

3. Procédé selon la revendication 2, dans lequel ladite généralisation se fait sur la base d'un ensemble de règles.

4. Procédé selon l'une quelconque des revendications précédentes, dans lequel ladite étape de production d'un lexique modifié comprend l'exclusion, du lexique courant, des variantes de prononciation qui ne sont pas nécessaires pour décrire le comportement d'élocution du locuteur courant.

5. Procédé selon l'une quelconque des revendications précédentes, dans lequel le lexique modifié (ML) est engendré de façon répétée après chaque nombre fixe et/ou prédéterminé d'étapes et/ou de résultats de reconnaissance, en particulier après chaque étape et/ou résultat de reconnaissance individuels.

6. Procédé selon l'une quelconque des revendications précédentes, dans lequel le nombre d'étapes et/ou de résultats de reconnaissance après lequel on engendre un lexique modifié (ML) est déterminé et/ou modifié dans le traitement courant de reconnaissance et/ou d'adaptation.

7. Procédé selon l'une quelconque des revendications précédentes, comprenant en outre les étapes :
de réception d'une séquence de phrases de parole (SP1, ..., SPN) et de production en conséquence d'une séquence de signaux correspondants (RS1, ..., RSN) de représentation ; et
de reconnaissance desdites phrases de parole (SP1, ..., SPN) reçues en engendrant et/ou en sortant au moins une première séquence de mots (Wj₁, ..., Wjₙj) ou analogue pour chaque signal (RSj) de représentation en tant que phrase de parole reconnue (RSPj) pour chaque phrase de parole (SPj) reçue ;
en engendrant et/ou sortant ainsi une séquence de phrases de parole reconnues (RSP1, ..., RSPN).

8. Procédé selon l'une quelconque des revendications précédentes, dans lequel on utilise un lexique - en particulier comme lexique de départ (SL) et/ou comme lexique courant (CL) dans chaque cas - qui contient au moins de l'information permettant la reconnaissance (REI) et/ou de l'information utile pour la reconnaissance (RRI) au moins en ce qui concerne des mots candidats possibles et/ou des morceaux de mot candidats possibles.

9. Procédé selon la revendication 8, dans lequel on utilise, comme morceaux de mot candidats, des phonèmes, des sons, des syllabes, des morceaux de mot individuels, une combinaison ou une séquence de ceux-ci et/ou analogue, en particulier pendant chaque traitement ou étape de reconnaissance et/ou dans ledit lexique de départ et/ou courant (SL, CL).

10. Procédé selon l'une quelconque des revendications précédentes, dans lequel on utilise, dans chaque traitement de reconnaissance, de l'information de vocabulaire, de l'information de prononciation, de l'information de modèle de langage, de l'information de grammaire et/ou de syntaxe, de l'information sémantique additionnelle et/ou analogue, en particulier comme partie de ladite information (REI, RRI) permettant/liée à la reconnaissance dudit lexique en particulier dudit lexique de départ (SL) et/ou dudit lexique courant (CL) dans chaque cas.

11. Procédé selon l'une quelconque des revendications précédentes, dans lequel on utilise un lexique de départ (SL) indépendant du locuteur.

12. Procédé selon l'une quelconque des revendications précédentes ;
dans lequel ledit lexique modifié (ML) et/ou le lexique courant (CL) sont constitués comme une composition décomposable (SL + SRL) dudit lexique de départ (SL) et d'un lexique lié au locuteur (SRL) ;
ce dernier contenant de l'information utile pour la reconnaissance (RRI) spécifique au locuteur, en particulier en ce qui concerne au moins les résultats de reconnaissance déjà obtenus pour le locuteur courant.

13. Procédé selon la revendication 12, dans lequel ledit lexique lié au locuteur (SRL) est constitué dans une étape ou traitement courant de reconnaissance et/ou obtenu à partir de traitements de reconnaissance antérieurs et/ou étrangers, en particulier en effectuant un traitement approprié de pondération.

14. Procédé selon l'une quelconque des revendications précédentes, dans lequel l'information liée à la reconnaissance (RRI) et en particulier le lexique lié au locuteur (SRL) est retirée dudit lexique courant (CL) à la fin du traitement de reconnaissance pour le locuteur courant et/ou avant le commencement d'un autre traitement de reconnaissance, en particulier avec un nouveau ou autre locuteur.

15. Procédé selon l'une quelconque des revendications précédentes, dans lequel pour chaque locuteur spécifique en cours du traitement, ledit lexique lié au locuteur (SRL) et/ou des données de signature liée au locuteur sont obtenus au cours du traitement de reconnaissance et/ou sont mémorisés.

16. Procédé selon la revendication 15 ;
dans lequel au commencement d'un nouveau traitement de reconnaissance, on vérifie - en particulier en se basant sur l'ensemble ou liste de lexiques et/ou de signatures liés au locuteur - si le locuteur en cours de traitement est un locuteur connu ; et
dans lequel, dans le cas d'un locuteur connu en cours du traitement, le lexique lié au locuteur (SRL), qui est spécifique pour le locuteur courant, est rappelé à partir de l'ensemble ou liste de lexiques liés au locuteur et est combiné en un lexique courant (CL), en particulier en un lexique de départ (SL), de façon à donner un lexique adapté au locuteur avec un haut rendement de reconnaissance.

17. Procédé selon l'une quelconque des revendications précédentes, dans lequel, en se basant sur l'information liée à la reconnaissance (RRI) du traitement et/ou étape courant de reconnaissance, l'information qui n'est pas couverte ou supportée par le comportement d'élocution du locuteur courant et/ou par l'information liée à la reconnaissance (RRI) est retirée dudit lexique courant (CL), en particulier du lexique de départ (SL) au cours du traitement de reconnaissance, en particulier pour former un lexique modifié (ML) ou un lexique courant (CL) pour une prochaine étape de reconnaissance.

18. Procédé selon l'une quelconque des revendications précédentes, dans lequel on garde trace des changements effectués dans chaque cas sur le lexique courant (CL) de façon à permettre la restauration ou la réinitialisation du traitement de reconnaissance dans le cas d'un changement de locuteur.

19. Procédé selon l'une quelconque des revendications précédentes, dans lequel, lorsque cela convient, l'information utile à la reconnaissance (RRI) ou analogue est généralisée à tout le lexique modifié (ML) et/ou courant (CL) et/ou au lexique de départ (SL).
